# EUROPÄISCHE PATENTSCHRIFT

(11) **EP 3 107 175 B1**
(45) Veröffentlichungstag und Bekanntmachung des Hinweises auf die Patenterteilung: **31.01.2018**
(21) Anmeldenummer: 16162202.2
(22) Anmeldetag: 24.03.2016
(51) Int. Cl.: H02J 3/12, H02J 3/32, H02J 3/38

(54) **NETZREGELUNG BEI GRENZWERTÜBERSCHREITUNGEN IN EINEM NIEDER- ODER MITTELSPANNUNGSNETZ**
NETWORK CONTROL FOR LIMIT EXCEEDENCES IN A LOW OR MEDIUM VOLTAGE NETWORK
RÉGULATION DE RÉSEAU POUR DES DÉPASSEMENTS DE VALEURS LIMITES DANS UN RÉSEAU DE TENSION MOYENNE OU FAIBLE

(30) Priorität: 15.06.2015 DE 102015210884
(43) Veröffentlichungstag der Anmeldung: 21.12.2016
(73) Patentinhaber: Siemens Aktiengesellschaft, 80333 München (DE)
(72) Erfinder: Einfalt, Alfred, 1210 Wien (AT); Gawron-Deutsch, Tobias, 1040 Wien (AT)
(74) Vertreter: Maier, Daniel Oliver

(56) Entgegenhaltungen:
- EP-A1- 2 763 264

## Beschreibung

### Technisches Gebiet

Die Erfindung betrifft ein Verfahren zur Netzregelung bei Grenzwertüberschreitungen in einem Nieder- oder Mittelspannungsnetz, wobei Stellbefehle von einer zentralen Regeleinheit des Nieder- oder Mittelspannungsnetzes an steuerbare Komponenten des Nieder- oder Mittelspannungsnetzes gesendet werden. Die Erfindung kann jeweils nur auf ein Niederspannungsnetz oder nur auf ein Mittelspannungsnetz angewendet werden.

Niederspannungsnetze sind ein Teil des Stromnetzes zur Verteilung der elektrischen Energie an den größten Teil der elektrischen Endverbraucher, der aus Niederspannungsgeräten besteht. Um Spannungsverluste zu vermeiden, sind Niederspannungsnetze in der räumlichen Ausdehnung auf einen Bereich von einigen 100 m bis zu einigen wenigen Kilometern beschränkt. Sie werden daher regional über Transformatorenstationen aus einem übergeordneten Mittelspannungsnetz gespeist. Sie werden in Europa üblicher Weise mit einer Netzspannung von 230 V (zwischen jedem Außenleiter und dem Neutralleiter) bzw. 400 V (zwischen den drei Außenleitern), jedenfalls aber nur bis zu 1000 V betrieben. Bemessungsleistungen einzelner Ortsnetztransformatoren können je nach Zielnetzplanung des jeweiligen Verteilnetzbetreibers variieren, liegen aber typischer Weise bei 250 oder 400kVA für ländliche Gebiete und 630 oder 800kVA für innerstädtische Gebiete.

Der Begriff Niederspannungsnetz im Sinne dieser Erfindung bezeichnet einen Teil des Verteilernetzes, also einen Abschnitt, der von einem bestimmten Ortsnetztransformator mit elektrischer Energie versorgt wird.

Komponenten des Niederspannungsnetzes können sein: Stromerzeuger (z.B. Photovoltaikanlagen, Kleinwindkraftanlagen), Speicher (z.B. Batterien, Wärmepumpen, Ladestationen für Elektrofahrzeuge), flexible Verbraucher (z.B. elektrische Speicherheizungen, Gebäude mit und ohne Gebäudeautomationssystem) und Netzbetriebsmittel (Transformatoren, Leitungen, Sicherungen, Messgeräte wie Smart Meter,...).

Dabei können insbesondere Stromerzeuger, Speicher und flexible Verbraucher als steuerbare Komponenten ausgeführt sein.

Mittelspannungsnetze sind ein Teil des Stromnetzes zur Verteilung der elektrischen Energie auf Strecken im Bereich einiger Kilometer bis zu 100 km in ländlichen Bereichen. Sie werden üblicherweise mit Hochspannung zwischen 1 kV und 52kV, insbesondere mit 10 kV, 20 kV oder 30 kV betrieben. Ein Mittelspannungsnetz dient typischerweise der elektrischen Energieversorgung einer Region, die mehrere Ortschaften, oder in Städten einen Stadtteil, umfasst. Mittelspannungsnetze der regionalen Verteilnetzbetreiber werden im Regelfall in Umspannwerken aus dem übergeordneten Hochspannungsnetz, wie der 110-kV-Ebene (Verteilnetzebene), gespeist und dienen der Anspeisung der regional verteilten Transformatorenstationen, welche die einzelnen Niederspannungsnetze zu den Endkunden versorgen. Größere Stromkunden, wie beispielsweise Industriebetriebe und Krankenhäuser aber auch größere Schwimmbäder und größere Rundfunktürme, haben meist eigene Mittelspannungsanschlüsse mit betriebseigener Umspannanlage.

Die für die Versorgung nötigen Leistungstransformatoren zur Anspeisung bewegen sich im Bereich von 20 MVA bis 60 MVA. In der Regel sind diese Leistungstransformatoren auch die letzte Ebene, auf der mittels Stufenschalter lastabhängige Spannungsschwankungen ausgeglichen werden können. Bei Bedarf können bei großer Einspeiseleistung von dezentral gewonnen regenerativen Energieträgern elektronische Mittelspannungsregler eingesetzt werden.

Mittelspannungsnetze sind in der Topologie als Strahlennetz oder als Ringnetz ausgeführt, insbesondere in städtischen Bereichen sind Ringleitungen üblich. Mittelspannungsnetze können von mehreren Punkten gespeist werden, auch kleinere Kraftwerke wie Windkraftanlagen, Biogasanlagen und große Photovoltaikanlagen speisen in regionale Mittelspannungsnetze ein.

Im Mittelspannungsnetz können insbesondere Leistungstransformatoren, Mittelspannungsregler, Stromerzeuger, Speicher und flexible Verbraucher als steuerbare Komponenten ausgeführt sein.

### Stand der Technik

Der klassische Netzbetrieb bei der Elektrizitätsversorgung ist durch die zunehmende Durchdringung mit dezentralen, meist erneuerbaren, Energieerzeugungsanlagen (DEA, üblicher Weise im Leistungsbereich von 3 bis 100 kW) vor große Herausforderungen gestellt. Hinzu kommen die Entwicklung der Elektromobilität und damit eine Verstärkung der Substitution von anderen Energieübertragungsformen durch Elektrizität. Durch den Wandel des Energiesystems von einem auf konventionelle Energieträger gestütztes auf ein auf erneuerbare Energieträger gestütztes steigt der Bedarf an Flexibilitäten. Dies resultiert aus der Tatsache, dass viele erneuerbare Energiequellen (Wind, Sonne, Wasser) nur situationsabhängig und nicht nach vorgegebenen Fahrplänen zur Verfügung stehen. Dadurch muss sich die frühere Prämisse "Erzeugung folgt dem Verbrauch" grundlegend hin zu "Verbrauch folgt Erzeugung" ändern.

Sogenannte Flexibilitätsanbieter stellen solche Werkzeuge zur Anpassung des Verbrauchs an die Erzeugung dar. Ein Flexibilitätsanbieter ist als eine große Gruppe unterschiedlicher Anwendungen zu sehen. Das können im einfachsten Fall flexible Lasten sein, z.B. Wärmepumpen, Ladestellen für Elektromobilität, Umwälzpumpen, Elektroheizungen, Elektroboiler, die reduziert oder abgeschaltet werden. Auf der Erzeugungsseite könnte die Einspeisung erneuerbarer oder auch konventioneller Erzeugungsanlagen (Windkraftanlagen, Photovoltaikanlagen, Kraft-Wärme-Kopplungen) reduziert werden. Ist auch ein elektrischer Speicher verfügbar, eventuell sogar in Kombination mit flexiblen Lasten oder auch Erzeugungsanlagen, sind Flexibilitäten in alle Leistungsrichtungen möglich.

Die Kernfrage der Energiewende aus großtechnischer Sicht ist nun, wie die einzelnen (nur oder auch) Energie verbrauchenden Netzteilnehmer, wie etwa Gebäude oder Gebäudegruppen, möglichst unbeeinflusst an unterschiedlichen Energiemärkten teilnehmen können, um z.B. die Stadt als Flexibilitätsquelle zur Unterstützung der Integration von erneuerbaren Energiequellen zu erschließen. Dabei muss aber sichergestellt werden, dass es zu keiner Verletzung der zulässigen Grenzwerte (Spannung, maximale Leistung, Frequenz) im Energieversorgungsnetz, etwa im Niederspannungsnetz, kommt.

Es kann zu Netzengpässen kommen, weil sich durch die Teilnahme an Energiemärkten und die Nutzung von internen Speichern (die aus Netzsicht nicht erkennbar sind, weil sie sich z.B. innerhalb von Gebäuden oder Gewerbeanlagen befinden) die bisherige zeitliche Verteilung der Last (z.B. entsprechend einem Standardlastprofil H0) ändern kann. Viele Prosumer (Kunden, die Energie produzieren und konsumieren) bekommen die gleichen Informationen über billige Energie und ändern demnach ihr Verbrauchsverhalten. Die bisherigen Annahmen zur Gleichzeitigkeit sind nicht mehr gültig und es kann zu starken Belastungsspitzen kommen. Wenn diese Belastungsspitzen die Grenzwerte des Energieversorgungsnetzes verletzen, muss eingegriffen werden.

Das sogenannte "Smart Grid" wird als Lösung für diese Problemstellungen gesehen. Das Smart Grid oder intelligente Stromnetz umfasst die kommunikative Vernetzung und Steuerung von Stromerzeugern, Speichern, elektrischen Verbrauchern und Netzbetriebsmitteln in Energieübertragungs- und Energieverteilungsnetzen der Elektrizitätsversorgung.

In Zukunft werden sogenannte "Smart Buildings", auch als intelligente Häuser oder intelligente Gebäude bezeichnet, ebenfalls Komponenten wie fluktuierende Erzeuger (z.B. Photovoltaikanlagen, Kleinwindkraftanlagen), flexible Verbraucher und Speicher für elektrische Energie enthalten, oder etwa die Ladeinfrastruktur für Elektrofahrzeuge. Das Gebäude wird "smart" bzw. intelligent durch den Einsatz eines modernen Gebäudeautomationssystems (CEMS - Customer Energy Management System). Gebäudeautomation umfasst die Gesamtheit von Überwachungs-, Steuer-, Regel- und Optimierungseinrichtungen in Gebäuden. Ziel ist es, Funktionsabläufe komponentenübergreifend selbstständig (automatisch) und nach vorgegebenen Einstellwerten (Parametern) durchzuführen. Alle Sensoren, Aktoren, Bedienelemente, Verbraucher und andere technische Einheiten im Gebäude werden miteinander vernetzt. Abläufe können in Szenarien zusammengefasst werden. Kennzeichnendes Merkmal ist die durchgängige Vernetzung mittels eines Bussystems.

Die Gebäudeautomationssysteme der Smart Buildings, bzw. die Energiemanagementsysteme als Teil der Gebäudeautomationssysteme, müssen daher für die einzelnen Komponenten des Gebäudes den Eigenbedarf elektrischer und thermischer Energie optimieren, lokale (auf das Gebäude bezogene) Prognosen erstellen und flexible Tarifvorgaben, die markt- bzw. auch netzspezifische Anteile aufweisen, berücksichtigen.

Ein Niederspannungsnetz weist verschiedene aktive Komponenten auf, die im Niederspannungsnetz zusammenarbeiten. Es gibt mehrere Arten von Verbrauchern, Erzeugern und Mischformen. Die angeschlossenen Gebäude können keine fernauslesbaren Zähler aufweisen, mit einem sogenannten "Smart Meter" ausgestattet oder auch mit einem Gebäudemanagementsystem ausgestattet sein. Weiters gibt es den Verteilnetzbetreiber, der einen, womöglich regelbaren, Ortsnetztransformator (RONT) und damit das gegenständliche Niederspannungsnetz betreibt. Alle diese Komponenten bilden zusammen den lokalen Abzweig, in dem die Netzrandbedingungen eingehalten werden müssen.

Keine der oben genannten Komponenten kann etwaige Netzprobleme ohne Drosselung beheben. Bisher wurden z.B. Wechselrichter mit einer P/Q-Einspeisebegrenzung (z.B. spannungsabhängige Wirk- und Blindleistungskennlinien) ausgestattet, die verhindert, dass bei einer lokalen Grenzwertüberschreitung zu viel Leistung in das Niederspannungsnetz eingespeist wird. Damit ist dann zwar lokal die Einhaltung der Netzrandbedingungen sichergestellt, aber es ist weder sicher, dass die Drosselung dieser Komponente ausreichend ist, noch, dass nicht zu stark gedrosselt wird und dadurch weniger Energie als möglich gewonnen wird.

Einen Versuch, die Marktaufsicht und die Netzaufsicht zu entflechten, stellt die sogenannte "Netzampel" dar. Die Zustände rot, gelb und grün spiegeln den jeweiligen Netzzustand wider. Die einzelnen Komponenten, insbesondere die Erzeuger, können nur im Zustand grün, wo aus lokaler Netzsicht keine Beschränkungen vorliegen und alle Marktmechanismen (z.B. Systemdienstleistungen für Übertragungsnetze zur Verfügung stellen) ohne Einschränkung eingesetzt werden können, oder im Zustand rot, wo die Netzrandbedingungen harte Vorgaben für die Einspeisung verlangen und dadurch Marktmechanismen für beschränkte Zeit lokal eingeschränkt sind, arbeiten. Im gelben Zustand sind Überlastungen zu erwarten und es kann innerhalb der Netzrandbedingungen eine marktbasierende Optimierung der Auslastung des Niederspannungsnetzes vorgenommen werden, also eine Optimierung der von den einzelnen Komponenten (z.B. der Erzeuger im Niederspannungsnetz) oder den einzelnen Marktteilnehmern gelieferten Energie im Hinblick auf den gerade geltenden Energiepreis. Hier werden mehr oder weniger komplizierte Mechanismen diskutiert, die darauf abzielen möglichst viele Marktanforderungen ohne starke Einschränkung zu ermöglichen.

Im roten Bereich wird es dem Verteilnetzbetreiber (kurz Netzbetreiber) ermöglicht, sein Verteilnetz zu schützen. Hier laufen zum einen klassische Netzregelungen, z.B. die Ansteuerung von regelbaren Netztransformatoren. Kann der Netzbetreiber sein Netz nicht ohne Mithilfe von steuerbaren Komponenten des Niederspannungsnetzes, z.B. Smart Buildings, schützen, muss es ein sogenanntes Prioritätssignal geben, das zwingend ist und auf das augenblicklich reagiert wird.

Eine Möglichkeit zur Umsetzung des Prioritätssignals ist die bekannte Tonrundsteueranlage, kurz TRA. Hiermit werden derzeit Lasten wie z.B. Speicherheizungen von einer Zentrale aus gesteuert. Hier bestehen aber auch technische Probleme, weshalb die TRA von Netzbetreibern zunehmend durch andere Einrichtungen abgelöst wird. Eine Nachfolge stellen zum Teil Smart Meter dar, die entweder selbst oder über ein zusätzliches Gateway einzelne Komponenten abschalten können. Es ist also technisch bereits möglich, einen unidirektionalen EIN/AUS Befehl abzusenden. Erhalten mehrere Komponenten gleichzeitig einen solchen Befehl, kann es durch das gleichzeitige Schalten der kollektiven Lasten zu Problemen kommen, die durch eine Gruppierung von Lasten (z.B. je Umspannwerk) und ein zeitlich versetztes Aussenden der Abschaltbefehle gemildert werden können, was zentral von der Leitstelle aus erfolgt.

Allerdings sind diese Methoden des unidirektionalen Aussendens von Stellbefehlen für die Anwendung als Prioritätssignal für den gezielten Schutz ausgewählter Niederspannungsnetze zu global und zu grob.

Weiterhin ist aus der Schrift EP 2 763264 A1 ein Verfahren bekannt, bei welchem eine Mehrzahl an dezentralen Energiegeneratoren von einer zentralen Regelungseinheit aus gesteuert werden. Dabei wird die Leistung der Energiegeneratoren in Abhängigkeit vom Stromversorgungsnetz mit einem zufälligen Faktor geregelt, welcher eine zufällige zeitliche Verzögerung und/oder eine Handlungswahrscheinlichkeit umfasst.

### Darstellung der Erfindung

Ein Ziel der vorliegenden Erfindung ist es daher, für ein Verfahren zur Netzregelung bei Grenzwertüberschreitungen in einem Nieder- oder Mittelspannungsnetz, wobei Stellbefehle von einer zentralen Regeleinheit des Nieder- oder Mittelspannungsnetzes an steuerbare Komponenten des Nieder- oder Mittelspannungsnetzes gesendet werden, ein Prioritätssignal zu generieren, das auf das jeweilige Nieder- oder Mittelspannungsnetz besser abgestimmt ist.

Diese Aufgabe wird durch ein Verfahren mit den Merkmalen des Patentanspruchs 1 gelöst, nämlich, - dass die zentrale Regeleinheit bei einer Grenzwertüberschreitung die notwendige Korrektur berechnet und eine entsprechende Handlungsanweisung zur Reduzierung von Grenzwertüberschreitungen an zumindest eine steuerbare Komponente sendet, - dass mit jeder Handlungsanweisung ein Wahrscheinlichkeitsfaktor in einem Bereich zwischen Werten 0 bis 1 mitgesendet wird, der inkrementell erhöht wird, wenn bei unzureichender Reaktion der steuerbaren Komponenten die Grenzwertüberschreitung nicht verhindert wird und somit erneut eine Handlungsanweisung gesendet werden muss, und durch welchen mit Erreichen des Wertes 1 eine Verpflichtung zum Handeln für die zumindest eine steuerbare Komponente zwingend wird, und - dass die zentrale Regeleinheit den Netzbetreiber informiert, falls die Notreserven der steuerbaren Komponenten nicht ausreichen, um die Grenzwertüberschreitung zu verhindern.

Nach einer Grenzwertüberschreitung wird berechnet, welche Korrektur durch die steuerbaren Komponenten vorgenommen werden müsste. Es wird dann als Prioritätssignal eine Handlungsanweisung erstellt, z.B. die Wirkleistung um einen bestimmten Wert zu reduzieren oder zu erhöhen, sowie ein Wahrscheinlichkeitsfaktor im Bereich zwischen 0 und 1. Wird die Handlungsanweisung nicht oder noch nicht ausreichend befolgt, wird dieser Wahrscheinlichkeitsfaktor um einen bestimmten Wert erhöht, und die Handlungsanweisung mit diesem neuen Wahrscheinlichkeitsfaktor erneut an die teilnehmenden steuerbaren Komponenten gesendet. Dieser Vorgang wird so lange wiederholt, bis die Grenzwertüberschreitung behoben ist.

Haben die von der zentralen Regeleinheit angesprochenen steuerbaren Komponenten nicht genug Notreserven zur Verfügung, um die Grenzwertüberschreitung ausreichend zu reduzieren, wird dies dem Netzbetreiber gemeldet, damit dieser entsprechende Maßnahmen setzen kann.

Grundsätzlich sind zwei verschiedene Verfahrensvarianten denkbar. Die erste besteht darin, dass die gleiche Handlungsanweisung mit dem gleichen Wahrscheinlichkeitsfaktor an mehrere, insbesondere alle, steuerbaren Komponenten gesendet wird, die solche Handlungsanweisungen empfangen können. Es wird also von der zentralen Regeleinheit ein einziges Signal ausgesendet und alle steuerbaren Komponenten, die das Signal empfangen können, sollten der im Signal enthaltenen Handlungsanweisung Folge leisten. Dies hat den Nachteil, das die Anstrengungen zur Behebung der Grenzwertverletzung möglicher Weise nicht gerecht auf die steuerbaren Komponenten verteilt wird.

Hier kann die zweite Ausführungsvariante Abhilfe bieten, indem für unterschiedliche steuerbare Komponenten unterschiedliche Handlungsanweisungen, aber mit demselben Wahrscheinlichkeitsfaktor, gesendet werden. Also einer Komponente könnte ein größerer Beitrag zur Netzstabilisierung abverlangt werden (z.B. mehr kW an Leistungserhöhung oder - reduktion) als einer anderen Komponente.

Dieser Ansatz kann noch weiter verbessert werden, indem die Auswahl der steuerbaren Komponenten, die einen Beitrag aus ihren Notreserven zu leisten haben, aufgrund von Topologieinformation über das Nieder- oder Mittelspannungsnetz erfolgt. Es ist also die absolute Lage (z.B. an welchem Leitungsstrang angeschlossen) der steuerbaren Komponenten und/oder die relative Lage (z.B. die Reihenfolge der steuerbaren Komponenten an einem Leitungsstrang) im Nieder- oder Mittelspannungsnetz bekannt. Damit kann sichergestellt werden, dass nur jene Komponenten angesprochen werden, die aufgrund ihrer Position im Nieder- oder Mittelspannungsnetz tatsächlich zu einer Lösung der Grenzwertüberschreitung beitragen können.

Damit bei einer Auswahl von bestimmten steuerbaren Komponenten für einen Beitrag zur Reduzierung der Grenzwertüberschreitung nicht eine einzelne Komponente über Gebühr belastet wird, kann vorgesehen sein, dass immer eine Mindestanzahl von steuerbaren Komponenten ausgewählt wird.

Eine - zur Auswahl von einer Mindestanzahl alternative - oder für beide Ausführungsvarianten weitere Ausführungsform der Erfindung sieht vor, dass jede steuerbare Komponente nach dem Zufallsprinzip für sich einen Auswahlfaktor festlegt, der zum Wahrscheinlichkeitsfaktor addiert wird und bei jeder weiteren Grenzwertüberschreitung im Nieder- oder Mittelspannungsnetz neu festgelegt wird. Der Auswahlfaktor liegt so wie der Wahrscheinlichkeitsfaktor zwischen 0 und 1. Damit ergibt sich für alle von einer bestimmten Handlungsanweisung betroffenen steuerbaren Komponenten ein unterschiedlicher resultierender Wahrscheinlichkeitsfaktor, wobei die Verpflichtung zum Handeln für die einzelne Komponente mit Erreichen des Werts 1 zwingend wird. Der Auswahlfaktor bleibt für die bestehende Grenzwertüberschreitung gleich, auch wenn die Handlungsanweisung mehrmals mit steigendem Wahrscheinlichkeitsfaktor gesendet werden muss. Erst bei der nächsten Grenzwertüberschreitung ergibt sich für die betreffende Komponente aufgrund des Zufallsprinzips in der Regel ein anderer Auswahlfaktor und damit ein anderer resultierender Wahrscheinlichkeitsfaktor als bei anderen Komponenten. Auf diese Weise kann sichergestellt werden, dass nicht immer die gleichen Komponenten zur Behebung von Grenzwertüberschreitungen herangezogen werden.

Die Handlungsanweisung wird in der Regel einen der folgenden Stellbefehle enthalten:
- Reduzierung der Wirkleistung um einen bestimmten Betrag
- Erhöhung der Wirkleistung um einen bestimmten Betrag
- Einstellung einer bestimmten induktiven Blindleistung
- Einstellung einer bestimmten kapazitiven Blindleistung.

Die Erfindung betrifft auch ein System zur Durchführung des erfindungsgemäßen Verfahrens, umfassend eine zentrale Regeleinheit und mehrere steuerbare Komponenten eines Nieder- oder Mittelspannungsnetzes, die über ein Kommunikationsnetz miteinander verbunden sind. Das System ist dadurch gekennzeichnet,
- dass mehrere steuerbare Komponenten über eine Sendeeinrichtung verfügen, um über das Kommunikationsnetz jeweils laufend Informationen über die eigenen Notreserven zur Reduzierung von Grenzwertüberschreitungen an die zentrale Regeleinheit zu senden,
- dass die zentrale Regeleinheit ausgebildet ist, um bei einer Grenzwertüberschreitung die notwendige Korrektur zu berechnen und eine entsprechende Handlungsanweisung zur Reduzierung von Grenzwertüberschreitungen an zumindest eine steuerbare Komponente zu senden, die Informationen über Notreserven sendet,
- dass die zentrale Regeleinheit weiters ausgebildet ist, um mit jeder Handlungsanweisung einen Wahrscheinlichkeitsfaktor in einem Bereich zwischen Werten 0 bis 1 mitzusenden, der inkrementell erhöht wird, wenn bei unzureichender Reaktion der steuerbaren Komponenten die Grenzwertüberschreitung nicht verhindert wird und somit erneut eine Handlungsanweisung gesendet werden muss, und durch welchen mit Erreichen des Wertes 1 eine Verpflichtung zum Handeln für die zumindest eine steuerbare Komponente zwingend wird, und
- dass die zentrale Regeleinheit weiters ausgebildet ist, um den Netzbetreiber zu informieren, falls die Notreserven der steuerbaren Komponenten nicht ausreichen, um die Grenzwertüberschreitung zu verhindern.

Die steuerbaren Komponenten können Gebäude mit Gebäudeautomationssystemen sein, wobei die Empfangseinrichtung jeweils Bestandteil des Gebäudeautomationssystems ist. Eine solche Empfangseinrichtung für den Empfang der Handlungsanweisungen bzw. Prioritätssignale sollte nicht nur bei Gebäudeautomationssystemen, sondern bei allen steuerbaren Komponenten in der Regel ohnehin vorhanden sein.

Das Kommunikationsnetz kann eine Trägerfrequenzanlage umfassen, die auch als Powerline Communication (PLC) bezeichnet wird und wo die Übertragung der Signale über das Stromnetz erfolgt, also hier über die Leitungsstränge des Nieder- oder Mittelspannungsnetzes.

Das Kommunikationsnetz kann aber auch fernauslesbare Zähler, sogenannte Smart Meter, umfassen, sodass die erfindungsgemäßen Handlungsanweisungen über die Datenverbindungen des Smart Meters übermittelt werden.

Das erfindungsgemäße Verfahren wird in der Regel als Computerprogramm implementiert sein, sodass die Erfindung auch ein Computerprogrammprodukt betrifft, welches ein Programm umfasst und direkt in einen Speicher einer zentralen Regeleinheit eines Nieder- oder Mittelspannungsnetzes ladbar ist, mit Programm-Mitteln, um alle Schritte des erfindungsgemäßen Verfahrens auszuführen, wenn das Programm von der zentralen Regeleinheit ausgeführt wird.

Die bisherigen Verfahren werden also durch ein erfindungsgemäßes Verfahren zur Sicherstellung der Netzintegration von frei an Märkten agierenden Flexibilitätsanbietern ersetzt, wobei die als unidirektionale, nicht diskriminierende Prioritätssignale verwendeten Handlungsanweisungen präziser und nachvollziehbarer zur Problembehebung eingesetzt werden können. Auf diese Weise können steuerbare Komponenten zur Sicherstellung der Netzqualität fair herangezogen werden.

Am erfindungsgemäßen Verfahren mitwirkende steuerbare Komponenten, insbesondere Smart Buildings, können, z.B. über ihre Gebäudeautomationssysteme (CEMS), gezielt angesprochen werden und es können ihnen gezielt Vorgaben gemacht werden. Diese Vorgaben müssen umgehend, ohne Rücksicht auf Komfortverlust, umgesetzt werden. Durch das Bewertungssystem mit Hilfe der Auswahlfaktoren kann sichergestellt werden, dass die Prioritätssignale nicht immer die gleichen steuerbaren Komponenten trifft.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
- Fig. 1: ein Ablaufschema für das erfindungsgemäße Verfahren in Zusammenhang mit den unterschiedlichen Netzzuständen gemäß der sogenannten Netzampel,
- Fig. 2: eine schematische Darstellung eines erfindungsgemäßen Niederspannungsnetzes.

### Ausführung der Erfindung

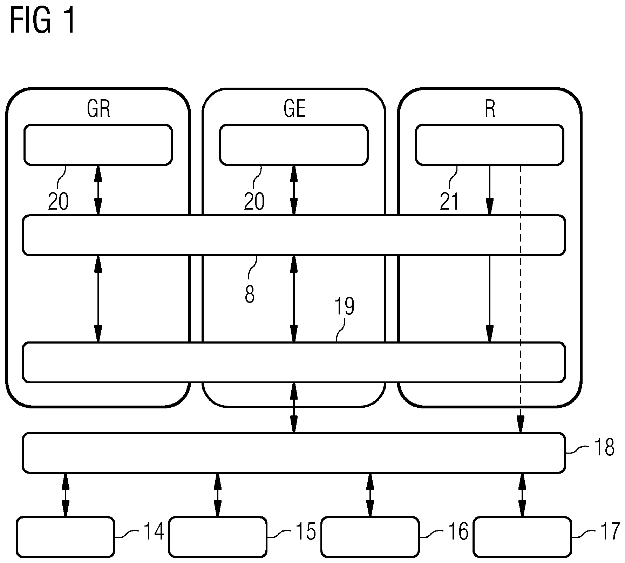

Das erfindungsgemäße Verfahren kann wie folgt in das Ampelmodell, das als Diskussionsgrundlage in der Nationalen Technologieplattform Smart Grids Austria entwickelt wurde (siehe Fig. 1), eingebettet werden. Die Zustände Rot R, Gelb GE und Grün GR spiegeln jeweils den unterschiedlichen Netzzustand wieder. Das gleiche gilt für alle lokalen Komponenten.

Die einzelnen steuerbaren Komponenten des Niederspannungsnetzes sind hier in Energieerzeuger 14, Elektrofahrzeuge bzw. deren Ladestationen 15, Energiespeicher 16 und flexible Verbraucher 17 unterteilt. Sie alle werden über Steuerungs- und Regeleinheiten 18 gesteuert bzw. geregelt, welche über eine übergeordnete Steuerung 19 (z.B. ein Gebäudemanagementsystem eines Gebäudes) überwacht wird.

Im Zustand Gelb oder Grün können marktbasierende Energiedienste 20, also etwa Marktmechanismen, auf die übergeordnete Steuerung 19 einwirken. Im Zustand Grün können dabei Informationen zu Energiepreis und/oder Energiemenge ausgetauscht werden und die Steuerung 19 bzw. die Steuer- und Regelungseinheiten 18 entsprechend andere Steuerbefehle an die steuerbaren Komponenten senden. Im Zustand Gelb können Informationen zu Energiepreis und/oder elektrischer Leistung ausgetauscht werden und die Steuerung 19 bzw. die Steuer- und Regelungseinheiten 18 entsprechend andere Steuerbefehle an die steuerbaren Komponenten senden.

Erfindungsgemäß ist nun zwischen die marktbasierenden Energiedienste 20 einerseits und die Steuerung 19 bzw. die Steuer- und Regelungseinheiten 18 andererseits die zentrale Regeleinheit 8 geschaltet, die in dieser Funktion auch als Flexibility Operator bezeichnet (Flexibilitätsanbieter) wird.

Im Netzzustand Rot R ist vorgesehen, dass eine Sicherheitseinrichtung 21 im Hinblick auf elektrische Leistung bzw. Last (durchgehender Pfeil) Steuerbefehle aussendet, die ebenfalls über die erfindungsgemäße zentrale Regeleinheit 8 laufen. Nur Steuersignale der Sicherheitseinrichtung 21 mit hoher Priorität (strichlierter Pfeil), die sogenannten Prioritätssignale, würden bei herkömmlichen Flexibilitätsanbietern direkt an die Steuerung 19 bzw. die Steuer- und Regelungseinheiten 18 gesendet. Die erfindungsgemäß betriebene zentrale Regeleinheit 8 sollte einen solchen Fall eines direkten Durchgriffs z.B. vom Verteilnetzbetreiber, weitgehend vermeiden, indem die Regeleinheit 8 das erfindungsgemäße Verfahren zur Anwendung bringt.

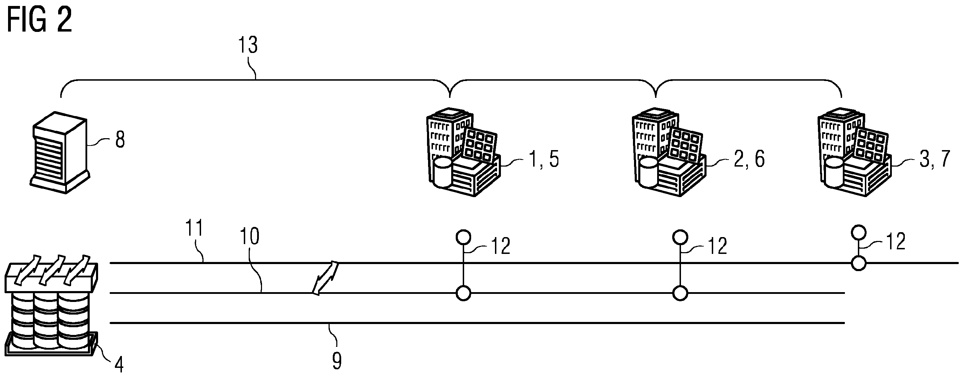

Fig. 2 zeigt beispielhaft das Schema eines Niederspannungsnetzes, welches über einen Ortsnetztransformator 4 mit elektrischer Energie versorgt wird. Das Niederspannungsnetz verfügt über steuerbare Komponenten, wie Smart Buildings 1,2,3 (intelligente Gebäude - sowohl Wohn- als auch Gewerbegebäude), von denen hier nur drei dargestellt sind. Selbstverständlich können auch andere steuerbare und nicht steuerbare Komponenten im Niederspannungsnetz vorhanden sein, diese sind hier aber nicht dargestellt. Insbesondere können auch andere Arten von steuerbaren Komponenten in das erfindungsgemäße Verfahren eingebunden werden. Alle Komponenten des Niederspannungsnetzes sind über elektrische Leitungen untereinander und mit dem Ortsnetztransformator 4 verbunden, nämlich mit den drei Phasenleitern, den Leitungssträngen 9,10,11. Die Smart Buildings 1,2,3 sind jeweils über Anbindungsleitungen 12 mit einem Leitungsstrang 9,10,11 verbunden. Dabei sind das erste 1 und das zweite Smart Building 2 mit dem zweiten Leitungsstrang 10 verbunden, das dritte Smart Building 3 mit dem dritten Leitungsstrang 11.

Die Smart Buildings 1,2,3 verfügen jeweils über ein Gebäudeautomationssystem 5,6,7, welches generell die Beschaffung, Wandlung, Verteilung und Nutzung von Energie, hier elektrischer Energie, koordiniert. Die Koordinierung erfolgt vorausschauend, organisiert, systematisch und unter Berücksichtigung ökologischer und ökonomischer Zielsetzungen. Es umfasst Organisations- und Informationsstrukturen einschließlich der dazu notwendigen technischen Maßnahmen wie z.B. Software. Ein Gebäudeautomationssystem 5,6,7 umfasst daher gemäß Erfindung zumindest einen Computer bzw. eine SPS mit Energiemanagement-Software sowie Datenverbindungen (z.B. Datenleitungen) zu Informationsquellen, Messgeräten und den zu steuernden Komponenten des Gebäudes.

Die Gebäudeautomationssysteme 5,6,7 sind über ein Kommunikationsnetz 13 mit der zentralen Regeleinheit 8 verbunden. Das Kommunikationsnetz 13 kann in einer Ausführungsform nur die Leitungsstränge 9,10,11 des Niederspannungsnetzes umfassen, sodass eine Powerline Communication (PLC) verwirklicht wird. In diesem Fall verfügt das Gebäudeautomationssystem 5,6,7 über ein PLC-Modem. Es können jedoch für das erfindungsgemäße Verfahren auch eigene Datenverbindungen hergestellt oder andere bestehende Datenverbindungen (z.B. von Smart Metern) genutzt werden. Im Fall eines Smart Meters ist dieses in das Gebäudeautomationssystem 5,6,7 integriert oder zumindest mit diesem verbunden.

Das Gebäudeautomationssystem 5,6,7 hört nun also laufend ("lauscht") über sein PLC-Modem oder sein Smart Meter, ob ein Prioritätssignal, enthaltend eine Handlungsanweisung und einen Wahrscheinlichkeitsfaktor, gesendet wird.

Wenn nun ein - in Fig. 2 durch einen Blitz dargestelltes - Netzproblem (z.B. sehr starke Überspannung über mehrere Minuten) im zweiten Leitungsstrang 10 auftritt, wird die zentrale Regeleinheit 8 (wenn der Ortsnetztransformator 4 das Netzproblem durch Stufenstellung nicht lösten konnte) das notwendige Prioritätssignal in Form einer erfindungsgemäßen Handlungsanweisung berechnen und an die Gebäudeautomationssysteme 5,6,7 senden. Die Handlungsanweisung kann z.B. lauten "xy kW Wirkleistung reduzieren", "xy kW Wirkleistung erhöhen", "xy kVAr Blindleistung induktiv" oder "xy kVAr Blindleistung kapazitiv". Denkbar sind auch Kombinationen von derartigen Handlungsanweisungen. Der mitgesendete Wahrscheinlichkeitsfaktor ist ein Wert zwischen 0 und 1 und wird bei unzureichender Reaktion und damit keiner Verminderung der Grenzwertüberschreitung inkrementell erhöht.

Bei der ersten Verfahrensvariante erhalten alle Gebäudeautomationssysteme 5,6,7 die gleiche Handlungsanweisung mit dem gleichen Wahrscheinlichkeitsfaktor. Lediglich ein unterschiedlicher Auswahlfaktor der einzelnen Gebäudeautomationssysteme 5,6,7 kann bedingen, dass die Smart Buildings 1,2,3 mit unterschiedlicher Priorität zur Behebung der Grenzwertüberschreitung beitragen.

Das Smart Building 3 kann aber durch Befolgen der Handlungsanweisung nichts beitragen, weil es nicht am betroffenen Leitungsstrang 10 angeschlossen ist. Wenn nun die Smart Buildings 1,2 nicht genügend Notreserven haben, kann das Problem nicht durch die Smart Buildings 1,2 gelöst werden, die zentrale Regeleinheit 8 muss dies der Zentrale des Netzbetreibers melden. Nachteilig an der ersten Verfahrensvariante ist, dass alle Smart Buildings 1,2,3 die maximale Notreserve liefern, ohne das Problem zu lösen.

Bei der zweiten Verfahrensvariante, bei welcher die Topologie des Niederspannungsnetzes bezüglich der Gebäudeautomationssysteme 5,6,7 bekannt ist, erhalten die einzelnen Gebäudeautomationssysteme 5,6,7 unterschiedliche Handlungsanweisungen, aber mit dem gleichen Wahrscheinlichkeitsfaktor. Eine Handlungsanweisung an ein Gebäudeautomationssystem könnte also lauten "xy kW Wirkleistung reduzieren", während die Handlungsanweisung an ein anderes Gebäudeautomationssystem lautet "yz kW Wirkleistung reduzieren", eventuell auch in Abhängigkeit der Topologie.

Dazu kann die zentrale Regeleinheit 8 über ein Topologiemodell verfügen und darauf basierend einzelne Smart Buildings 1,2,3 bzw. eine Gruppe auswählen. Dies kann z.B. über eine Beitragsmatrix erfolgen, in der die Wirksamkeit einzelner Smart Buildings 1,2,3 an bestimmten Netzknoten hinterlegt wird. Damit auch in diesem Fall ein gewisser Sicherheitsfaktor bzw. eine gewisse Fairness umgesetzt werden kann, wird die Gruppe nicht auf die kleinstmögliche reduziert (z.B. nicht auf ein Smart Building), sondern auch eine entsprechend höhere Anzahl von teilnehmenden steuerbaren Komponenten.

Es erhalten also nur die Gebäudeautomationssysteme 5,6 eine Handlungsanweisung, weil die Smart Buildings 1,2 am betroffenen Leitungsstrang 10 angeschlossen sind. Das Gebäudeautomationssystem 7 erhält keine Handlungsanweisung. Zusätzlich kann ein unterschiedlicher Auswahlfaktor der einzelnen Gebäudeautomationssysteme 5,6 bedingen, dass die Smart Buildings 1,2 mit unterschiedlicher Priorität zur Behebung der Grenzwertüberschreitung beitragen.

Bei beiden Verfahrensvarianten wird per Zufallsgenerator von einem Algorithmus jeweils innerhalb des Gebäudeautomationssystems 5,6,7 bei jedem neuen Prioritätssignal, das ankommt, ein Wert zwischen 0 und 1 ermittelt. Dies dient dazu, dass bei inkrementeller Erhöhung des Wahrscheinlichkeitsfaktors nicht alle gleichzeitig oder immer die gleichen zuerst zur Lösung der Grenzwertüberschreitung beitragen müssen. Dieser Auswahlfaktor dient also zur Etablierung einer gewissen Fairness.

### Bezugszeichenliste:

- 1: erstes Smart Building (intelligentes Gebäude)
- 2: zweites Smart Building (intelligentes Gebäude)
- 3: drittes Smart Building (intelligentes Gebäude)
- 4: Ortsnetztransformator
- 5: erstes Gebäudeautomationssystem
- 6: zweites Gebäudeautomationssystem
- 7: drittes Gebäudeautomationssystem
- 8: zentrale Regeleinheit
- 9: erster Leitungsstrang
- 10: zweiter Leitungsstrang
- 11: dritter Leitungsstrang
- 12: Anbindungsleitung
- 13: Kommunikationsnetz
- 14: Energieerzeuger
- 15: Elektrofahrzeuge bzw. deren Ladestationen
- 16: Energiespeicher
- 17: flexible Verbraucher
- 18: Steuer- und Regelungseinheiten für steuerbare Komponenten
- 19: übergeordnete Steuerung
- 20: marktbasierende Energiedienste
- 21: Sicherheitseinrichtung

- GE: Netzzustand Gelb
- GR: Netzzustand Grün
- R: Netzzustand Rot

## Patentansprüche

1. Verfahren zur Netzregelung bei Grenzwertüberschreitungen in einem Nieder- oder Mittelspannungsnetz, wobei Stellbefehle von einer zentralen Regeleinheit (8) des Nieder- oder Mittelspannungsnetzes an steuerbare Komponenten (1,2,3) des Nieder- oder Mittelspannungsnetzes gesendet werden, **dadurch gekennzeichnet,**
- **dass** die zentrale Regeleinheit (8) bei einer Grenzwertüberschreitung die notwendige Korrektur berechnet und eine entsprechende Handlungsanweisung zur Reduzierung von Grenzwertüberschreitungen an zumindest eine steuerbare Komponente (1,2,3) sendet,
- **dass** mit jeder Handlungsanweisung ein Wahrscheinlichkeitsfaktor in einem Bereich zwischen Werten 0 und 1 mitgesendet wird, der inkrementell erhöht wird, wenn bei unzureichender Reaktion der steuerbaren Komponenten (1,2,3) die Grenzwertüberschreitung nicht verhindert wird und somit erneut eine Handlungsanweisung gesendet werden muss, und durch welchen mit Erreichen des Wertes 1 eine Verpflichtung zum Handeln für die zumindest eine steuerbare Komponente (1,2,3) zwingend wird, und
- **dass** die zentrale Regeleinheit (8) den Netzbetreiber informiert, falls die Notreserven der steuerbaren Komponenten (1,2,3) nicht ausreichen, um die Grenzwertüberschreitung zu verhindern.

2. Verfahren nach Anspruch 1, **dadurch gekennzeichnet, dass** die gleiche Handlungsanweisung mit dem gleichen Wahrscheinlichkeitsfaktor an mehrere, insbesondere alle, steuerbaren Komponenten (1,2,3) gesendet wird, die solche Handlungsanweisungen empfangen können.

3. Verfahren nach Anspruch 1, **dadurch gekennzeichnet, dass** für unterschiedliche steuerbare Komponenten (1,2,3) unterschiedliche Handlungsanweisungen, aber mit demselben Wahrscheinlichkeitsfaktor, gesendet werden.

4. Verfahren nach Anspruch 3, **dadurch gekennzeichnet, dass** die Auswahl der steuerbaren Komponenten (1,2,3) aufgrund von Topologieinformation über das Nieder- oder Mittelspannungsnetz erfolgt.

5. Verfahren nach einem der Ansprüche 3-4, **dadurch gekennzeichnet, dass** eine Mindestanzahl von steuerbaren Komponenten (1,2,3) ausgewählt wird.

6. Verfahren nach einem der Ansprüche 1 bis 5, **dadurch gekennzeichnet, dass** jede steuerbare Komponente (1,2,3) nach dem Zufallsprinzip für sich einen Auswahlfaktor festlegt, der zum Wahrscheinlichkeitsfaktor addiert wird und bei jeder weiteren Grenzwertüberschreitung im Nieder- oder Mittelspannungsnetz neu festgelegt wird.

7. Verfahren nach einem der Ansprüche 1 bis 6, **dadurch gekennzeichnet, dass** die Handlungsanweisung einen der folgenden Stellbefehle enthält:
- Reduzierung der Wirkleistung um einen bestimmten Betrag
- Erhöhung der Wirkleistung um einen bestimmten Betrag
- Einstellung einer bestimmten induktiven Blindleistung
- Einstellung einer bestimmten kapazitiven Blindleistung.

8. System zur Durchführung des Verfahrens nach einem der Ansprüche 1 bis 7, umfassend eine zentrale Regeleinheit (8) und mehrere steuerbare Komponenten (1,2,3) eines Nieder- oder Mittelspannungsnetzes, die über ein Kommunikationsnetz (13) miteinander verbunden sind, **dadurch gekennzeichnet,**
- **dass** mehrere steuerbare Komponenten (1,2,3) über eine Empfangseinrichtung für den Empfang von Handlungsanweisungen über das Kommunikationsnetz (13) verfügen,
- **dass** die zentrale Regeleinheit (8) ausgebildet ist, um bei einer Grenzwertüberschreitung die notwendige Korrektur zu berechnen und eine entsprechende Handlungsanweisung zur Reduzierung von Grenzwertüberschreitungen an zumindest eine steuerbare Komponente (1,2,3) zu senden,
- **dass** die zentrale Regeleinheit (8) weiters ausgebildet ist, um mit jeder Handlungsanweisung einen Wahrscheinlichkeitsfaktor in einem Bereich zwischen Werten 0 und 1 mitzusenden, der inkrementell erhöht wird, wenn bei unzureichender Reaktion der steuerbaren Komponenten (1,2,3) die Grenzwertüberschreitung nicht verhindert wird und somit erneut eine Handlungsanweisung gesendet werden muss, und durch welchen mit Erreichen des Wertes 1 eine Verpflichtung zum Handeln für die zumindest eine steuerbare Komponente (1,2,3) zwingend wird, und
- **dass** die zentrale Regeleinheit (8) weiters ausgebildet ist, um den Netzbetreiber zu informieren, falls die Notreserven der steuerbaren Komponenten (1,2,3) nicht ausreichen, um die Grenzwertüberschreitung zu verhindern.

9. System nach Anspruch 8, **dadurch gekennzeichnet, dass** die steuerbaren Komponenten (1,2,3) Gebäude mit Gebäudeautomationssystemen (5,6,7) sind, wobei die Empfangseinrichtung jeweils Bestandteil des Gebäudeautomationssystems (5,6,7) ist.

10. System nach Anspruch 8 oder 9, **dadurch gekennzeichnet, dass** das Kommunikationsnetz (13) eine Trägerfrequenzanlage umfasst.

11. System nach Anspruch 8 oder 9, **dadurch gekennzeichnet, dass** das Kommunikationsnetz (13) fernauslesbare Zähler umfasst.

12. Computerprogrammprodukt, welches ein Programm umfasst und direkt in einen Speicher einer zentralen Regeleinheit (8) eines Nieder- oder Mittelspannungsnetzes ladbar ist, mit Programm-Mitteln, um alle Schritte des Verfahrens nach einem der Ansprüche 1 bis 7 auszuführen, wenn das Programm von der zentralen Regeleinheit (8) ausgeführt wird.

## Claims

1. Method for network regulation on threshold value overshoots in a low voltage or medium voltage network, wherein control commands are transmitted from a central regulation unit (8) of the low voltage or medium voltage network to controllable components (1, 2, 3) of the low voltage or medium voltage network, **characterised in that**
- on a threshold value overshoot, the central regulation unit (8) calculates the necessary correction and transmits a suitable action instruction for reducing threshold value overshoots to at least one controllable component (1, 2, 3),
- with each action instruction, a probability factor in a range between the values 0 and 1 is also transmitted which is incrementally raised if, given an insufficient reaction of the controllable components (1, 2, 3), the threshold value overshoot is not prevented and thus an action instruction must be transmitted anew, and by which a requirement to take action for the at least one controllable component (1, 2, 3) is compulsory on reaching the value 1, and
- the central regulation unit (8) informs the network operator if the emergency reserves of the controllable components (1, 2, 3) are not sufficient to prevent the threshold value overshoot.

2. Method according to claim 1, **characterised in that** the same action instruction is transmitted with the same probability factor to a plurality of, in particular all, controllable components (1, 2, 3) which are able to receive such action instructions.

3. Method according to claim 1, **characterised in that** different action instructions are transmitted for different controllable components (1, 2, 3), but with the same probability factor.

4. Method according to claim 3, **characterised in that** the selection of the controllable components (1, 2, 3) is carried out on the basis of topological information about the low voltage or medium voltage network.

5. Method according to one of claims 3-4, **characterised in that** a minimum number of controllable components (1, 2, 3) is selected.

6. Method according to one of claims 1 to 5, **characterised in that** each controllable component (1, 2, 3) specifies for itself, according to the random process, a selection factor which is added to the probability factor and on each further threshold value overshoot in the low voltage or medium voltage network is specified anew.

7. Method according to one of claims 1 to 6, **characterised in that** the action instruction contains one of the following control commands:
- reduce the effective power by a specified amount
- increase the effective power by a specified amount
- set a specified inductive reactive power
- set a specified capacitive reactive power.

8. System for carrying out the method according to one of claims 1 to 7, comprising a central regulation unit (8) and a plurality of controllable components (1, 2, 3) of a low voltage or medium voltage network which are connected to one another via a communication network (13), **characterised in that**
- a plurality of controllable components (1, 2, 3) have a receiving device for receiving action instructions via the communication network (13),
- the central regulation unit (8) is configured to calculate, on a threshold value overshoot, the necessary correction and to transmit a suitable action instruction for reducing threshold value overshoots to at least one controllable component (1, 2, 3),
- the central regulation unit (8) is further configured in order, with each action instruction, also to transmit a probability factor in a range between the values 0 and 1 which is incrementally raised if, given an insufficient reaction of the controllable components (1, 2, 3), the threshold value overshoot is not prevented and thus an action instruction must be transmitted anew, and by which a requirement to take action for the at least one controllable component (1, 2, 3) is compulsory on reaching the value 1, and
- the central regulation unit (8) is further configured to inform the network operator if the emergency reserves of the controllable components (1, 2, 3) are not sufficient to prevent the threshold value overshoot.

9. System according to claim 8, **characterised in that** the controllable components (1, 2, 3) are buildings with building automation systems (5, 6, 7) wherein the receiving device is a component part of the respective building automation system (5, 6, 7).

10. System according to claim 8 or 9, **characterised in that** the communication network (13) comprises a carrier frequency system.

11. System according to claim 8 or 9, **characterised in that** the communication network (13) comprises remotely readable counters.

12. Computer program product which comprises a program and can be loaded directly into a memory store of a central regulation unit (8) of a low voltage or medium voltage network, and has program means to carry out all the steps of the method according to one of claims 1 to 7 when the program is executed by the central regulation unit (8).

## Revendications

1. Procédé de régulation de réseau pour des dépassements de valeurs limites dans un réseau de tension moyenne ou faible, des ordres de régulation étant envoyés par une unité de régulation centrale (8) du réseau de tension moyenne ou faible à des composants commandables (1, 2, 3) du réseau de tension moyenne ou faible, **caractérisé en ce que** :
- l'unité de régulation centrale (8), en cas de dépassement de valeur limite, calcule la correction nécessaire et envoie une instruction opératoire appropriée pour réduire des dépassements de valeurs limites à au moins un composant commandable (1, 2, 3) ;
- avec chaque instruction opératoire est envoyé un facteur de probabilité dans une plage comprise entre des valeurs 0 et 1, lequel est augmenté incrémentiellement si, en cas de réaction insuffisante des composants commandables (1, 2, 3), le dépassement de valeur limite n'est pas empêché et une instruction opératoire doit ainsi de nouveau être envoyée, et par lequel devient obligatoire, à l'obtention de la valeur 1, une obligation d'agir pour l'au moins un composant commandable (1, 2, 3), et
- l'unité de régulation centrale (8) informe le gestionnaire de réseau si les réserves de secours des composants commandables (1, 2, 3) ne suffisent pas pour empêcher le dépassement de valeur limite.

2. Procédé selon la revendication 1, **caractérisé en ce que** la même instruction opératoire est envoyée avec le même facteur de probabilité à plusieurs, et plus particulièrement à tous les composants commandables (1, 2, 3) qui peuvent recevoir de telles instructions opératoires.

3. Procédé selon la revendication 1, **caractérisé en ce que** sont envoyées, pour différents composants commandables (1, 2, 3), différentes instructions opératoires, mais avec le même facteur de probabilité.

4. Procédé selon la revendication 3, **caractérisé en ce que** la sélection des composants commandables (1, 2, 3) est effectuée sur la base d'une information topologique sur le réseau de tension moyenne ou faible.

5. Procédé selon l'une des revendications 3-4, **caractérisé en ce qu'**un nombre minimum de composants commandables (1, 2, 3) est sélectionné.

6. Procédé selon l'une des revendications 1 à 5, **caractérisé en ce que** chaque composant commandable (1, 2, 3) fixe pour soi, au hasard, un facteur de sélection qui est ajouté au facteur de probabilité et fixé de nouveau à chaque autre dépassement de valeur limite dans le réseau de tension moyenne ou faible.

7. Procédé selon l'une des revendications 1 à 6, **caractérisé en ce que** l'instruction opératoire contient l'un des ordres de régulation suivantes :
- réduction de la puissance active d'une valeur absolue déterminée ;
- augmentation de la puissance active d'une valeur absolue déterminée ;
- réglage d'une puissance réactive inductive déterminée ;
- réglage d'une puissance réactive capacitive déterminée.

8. Système permettant d'exécuter le procédé selon l'une des revendications 1 à 7, comprenant une unité de régulation centrale (8) et plusieurs composants commandables (1, 2, 3) d'un réseau de tension moyenne ou faible reliés entre eux par l'intermédiaire d'un réseau de communication (13),
carctérisé en ce que :
- plusieurs composants commandables (1, 2, 3) disposent d'un dispositif récepteur pour la réception d'instructions opératoires via le réseau de communication (13) ;
- l'unité de régulation centrale (8) est réalisée pour calculer la correction nécessaire en cas de dépassement de valeur limite et pour envoyer à au moins un composant commandable (1, 2, 3) une instruction opératoire appropriée pour réduire des dépassements de valeurs limites ;
- l'unité de régulation centrale (8) est en outre réalisée pour émettre avec chaque instruction opératoire un facteur de probabilité dans une plage comprise entre des valeurs 0 et 1, lequel est augmenté incrémentiellement si, en cas de réaction insuffisante des composants commandables (1, 2, 3), le dépassement de valeur limite n'est pas empêché et une instruction opératoire doit ainsi de nouveau être envoyée, et par lequel devient obligatoire, à l'obtention de la valeur 1, une obligation d'agir pour l'au moins un composant commandable (1, 2, 3), et
- l'unité de régulation centrale (8) est en outre réalisée pour informer le gestionnaire de réseau si les réserves de secours des composants commandables (1, 2, 3) ne suffisent pas pour empêcher le dépassement de valeur limite.

9. Système selon la revendication 8, **caractérisé en ce que** les composants commandables (1, 2, 3) sont des bâtiments avec des systèmes d'automatisation du bâtiment (5,6,7), le dispositif récepteur étant respectivement un composant du système d'automatisation du bâtiment (5,6,7).

10. Système selon la revendication 8 ou 9, **caractérisé en ce que** le réseau de communication (13) comprend une installation de fréquence porteuse.

11. Système selon la revendication 8 ou 9, **caractérisé en ce que** le réseau de communication (13) comprend des compteurs pouvant être relevés à distance.

12. Produit de programme informatique qui comprend un programme et peut être chargé directement dans une mémoire d'une unité de régulation centrale (8) d'un réseau de tension moyenne ou faible, comportant des moyens de programme pour exécuter toues les étapes du procédé selon l'une des revendications 1 à 7 lorsque le programme est exécuté par l'unité de régulation centrale (8).
